(19) Europäisches Patentamt
European Patent Office
Office européen des brevets

(11) **EP 4 730 754 A1**

(12) **EUROPEAN PATENT APPLICATION**
published in accordance with Art. 153(4) EPC

(43) Date of publication:
**22.04.2026 Bulletin 2026/17**

(21) Application number: **24933868.2**

(22) Date of filing: **23.12.2024**

(51) International Patent Classification (IPC):
***H04M 1/02*** *(2006.01)*

(52) Cooperative Patent Classification (CPC):
**H04M 1/02; H04M 1/03**

(86) International application number:
**PCT/CN2024/141615**

(87) International publication number:
**WO 2025/208944 (09.10.2025 Gazette 2025/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.04.2024 CN 202410399438**

(71) Applicant: **Huawei Technologies Co., Ltd.**
**Shenzhen, Guangdong 518129 (CN)**

(72) Inventors:
• **SUN, Yong**
**Shenzhen, Guangdong 518129 (CN)**
• **WU, Bo**
**Shenzhen, Guangdong 518129 (CN)**
• **HUANG, Bo**
**Shenzhen, Guangdong 518129 (CN)**
• **MAO, Weihua**
**Shenzhen, Guangdong 518129 (CN)**
• **XU, Yi**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **ELECTRONIC DEVICE**

(57)     This application provides an electronic device. The electronic device includes a first display, a first sound-emitting area, a second sound-emitting area, and a second display. The first display includes a first display area and a second display area, and when the electronic device is in a folded state, the first display area of the first display is opposite to the second display area of the first display. The first display area of the first display and the second display are stacked. The first display is disposed on a first surface of the electronic device, the second display is disposed on a second surface of the electronic device, the first surface is connected to the second surface through a bezel, the first sound-emitting area is provided on the first surface and/or the bezel, and the second sound-emitting area is provided on the second surface and/or the bezel. The first sound-emitting area is used to emit sound when the electronic device is in an unfolded state, and the second sound-emitting area is used to emit sound when the electronic device is in the folded state.

FIG. 7

EP 4 730 754 A1

**Description**

This application claims priority to Chinese Patent Application No. 202410399438.5, filed with the China National Intellectual Property Administration on April 2, 2024 and entitled "ELECTRONIC DEVICE", which is incorporated herein by reference in its entirety.

**TECHNICAL FIELD**

Embodiments of this application relate to the field of electronics technologies, and in particular, to an electronic device.

**BACKGROUND**

With continuous development of display technologies, form factors of displays of electronic devices also change greatly. A foldable display emerges as a new form factor of a display and is applied to an electronic device such as a mobile phone. When a user does not need to use the mobile phone, the foldable display may be in a folded state, to reduce a size of the mobile phone and facilitate carrying by the user. When the user needs to use the screen of the mobile phone for an operation such as reading or entertainment, the foldable display may be in an unfolded state, so that a relatively large display area can be obtained, thereby improving a viewing effect.

In addition, a dual-display mobile phone featuring both an inner display and an outer display gradually becomes a development direction for a future mobile phone. However, for a dual-display mobile phone in a folded state, a call effect is relatively poor.

**SUMMARY**

Embodiments of this application provide an electronic device to resolve a problem that the electronic device in a folded state either cannot make calls or has suboptimal call quality.

This application provides an electronic device. The electronic device includes a first display, a first middle frame, a hinge, a second middle frame, a first sound-emitting area, a second sound-emitting area, a second display, and a back cover, where the first display includes a first display area and a second display area, and when the electronic device is in a folded state, the first display area of the first display is opposite to the second display area of the first display; the first middle frame is rotatably connected to the second middle frame through the hinge, the first display area of the first display, the first middle frame, and the second display are stacked, and the second display area of the first display, the second middle frame, and the back cover are stacked; the first middle frame includes a first side edge connecting the first display area and the second display, the second middle frame includes a second side edge connecting the second display area and the back cover, the first display is disposed on a first surface of the electronic device, the second display is disposed on a second surface of the electronic device, the first surface is connected to the second surface through a bezel, the first sound-emitting area is provided on the first surface or the first side edge, and the second sound-emitting area is provided on the second surface or the second side edge; and the first sound-emitting area is used to emit sound when the electronic device is in an unfolded state, and the second sound-emitting area is used to emit sound when the electronic device is in the folded state.

In this way, when the electronic device is in the unfolded state, the first display may be enabled to face a user. In this case, sound is emitted through the first sound-emitting area, and a sound effect is better, thereby improving call experience of the user. When the electronic device is in the folded state, the second display may be enabled to face the user. In this case, sound is emitted through the second sound-emitting area, and a sound effect is better, thereby further improving call experience of the user. Therefore, according to the electronic device provided in this embodiment of this application, two sound-emitting areas are provided, so that sound is emitted through one sound-emitting area when the electronic device is in the unfolded state, and that sound is emitted through the other sound-emitting area when the electronic device is in the folded state, thereby improving a sound effect of the device.

In an optional implementation, the first side edge includes a first bezel, a second bezel connected to one end of the first bezel, and a third bezel connected to the other end of the first bezel; the second side edge includes a fourth bezel, a fifth bezel connected to one end of the fourth bezel, and a sixth bezel connected to the other end of the fourth bezel; the first bezel and the fourth bezel are both parallel to the hinge; and when the electronic device is in the unfolded state, the second bezel and the fifth bezel are arranged in a direction perpendicular to the hinge; a length of the first bezel is less than a sum of lengths of the second bezel and the fifth bezel; and the first sound-emitting area is located close to the first bezel. Therefore, when the electronic device is in the unfolded state, for example, the first bezel is a top edge of the electronic device, the fourth bezel is a bottom edge of the electronic device, the second bezel and the fifth bezel are right side edges of the electronic device, the third bezel and the sixth bezel are left side edges of the electronic device, and the first sound-emitting area is provided at a position close to the first bezel, that is, the first sound-emitting area is close to the top of the device. The first sound-emitting area is intended to be placed close a human ear to answer a call or listen to a voice message, thereby better meeting a user requirement and improving call experience of the user.

In an optional implementation, a length of the second bezel is less than the length of the first bezel, and the second sound-emitting area is located close to the second bezel. Therefore, when the electronic device is in the folded state, the second bezel is used as a top edge of the electronic device, the third bezel is a bottom edge of the electronic device, the first bezel is a right side edge of the electronic device, and the hinge is a left side edge of the electronic device. The second sound-emitting area located close to the top of the device is placed close to a human ear to answer a call or listen to a voice message, thereby better meeting a user requirement and improving call experience of the user.

In an optional implementation, the electronic device further includes a first camera module, a first sound-emitting component, a second sound-emitting component, and a second camera module, where the first sound-emitting component communicates with the first sound-emitting area, the second sound-emitting component communicates with the second sound-emitting area, the first sound-emitting component and the first camera module are disposed close to the first bezel, and the second sound-emitting component and the second camera module are disposed close to the second bezel. The first camera module may be a front-facing camera module, and the second camera module may be a rear-facing camera module.

The first sound-emitting component and the first camera module are disposed close to the first bezel. When the electronic device is in the unfolded state, the first bezel is used as a top edge, the second bezel and the fifth bezel are used as side edges, and the user may hold a side edge with one hand. Correspondingly, the first sound-emitting component and the first camera module are disposed at a position close to the first bezel, that is, disposed at the top of the electronic device, thereby better meeting a user requirement and improving call experience of the user.

The second sound-emitting component and the second camera module are disposed close to the second bezel. When the electronic device is in the folded state, the second bezel is used as a top edge, the first bezel is used as a side edge, and the user may hold the side edge with one hand. Correspondingly, the second sound-emitting component and the second camera module are disposed at a position close to the second bezel, that is, disposed at the top of the electronic device, thereby better meeting a user requirement and improving call experience of the user.

In an optional implementation, the first camera module and the first sound-emitting component are disposed below the first display. Therefore, the first display may use a full screen design, with a larger display area, thereby improving user experience.

In an optional implementation, the second surface includes a first area, a second area, and a third area, where the second camera module is disposed in the first area, the second sound-emitting component is disposed in the second area, and the second display includes a first part disposed in the third area. In other words, the second camera module and the second sound-emitting component are disposed outside an area of the second display, that is, the second display is disposed independently of the second camera module and the second sound-emitting component, and no hole needs to be provided on the second display, thereby reducing impact of the second camera module and the second sound-emitting component on the second display.

In an optional implementation, the second display further includes a first part disposed in the third area, and a second part disposed in the first area, where the second camera module is disposed below the second part of the second display. In other words, the second sound-emitting component is disposed outside the area of the second display, and the second camera module is disposed in the area of the second display, that is, the second display is disposed independently of the second sound-emitting component. The second display uses a non-rectangular structure, with a larger display area, thereby improving user experience.

In an optional implementation, the second display includes a first part disposed in the third area, and a third part disposed in the second area, where the second sound-emitting component is disposed below the third part of the second display. In other words, the second sound-emitting component is disposed in the area of the second display, and the second camera module is disposed outside the area of the second display, that is, the second display is disposed independently of the second sound-emitting component. The second display uses a non-rectangular structure, with a larger display area, thereby improving user experience.

In an optional implementation, the second display includes a first part disposed in the third area, a second part disposed in the first area, and a third part disposed in the second area, where the second camera module is disposed below the second part of the second display, and the second sound-emitting component is disposed below the third part of the second display, that is, both the second sound-emitting component and the second camera module are disposed in the area of the second display. The second display uses a full screen design, with a larger display area, thereby further improving user experience.

In an optional implementation, the second camera module and the second sound-emitting component are arranged in a direction perpendicular to the hinge. In this way, the second camera module and the second sound-emitting component are arranged linearly, thereby better meeting a use requirement of the user, and facilitating a maximized design of the second display.

In an optional implementation, the second camera module includes a plurality of camera modules, and the plurality of camera modules are arranged in a direction perpendicular to the hinge. In this way, the plurality of camera modules are arranged linearly along a normal direction of the hinge, thereby better meeting a use requirement of the user, and facilitating a maximized design of the second display.

In an optional implementation, the electronic device further includes a third sound-emitting area, and the third sound-emitting area is provided on the fourth bezel, or the third sound-emitting area is provided at a position that is on the first surface and that is close to the fourth bezel. Therefore, when the electronic device is in the unfolded state, the first bezel is located at the top of the electronic device, and the fourth bezel is located at the bottom of the electronic device. Correspondingly, the third sound-emitting area is provided at a position close to the fourth bezel, so that the user can listen to audio, answer a call in hands-free mode, or the like through the third sound-emitting area, thereby better meeting a user requirement and improving call experience of the user.

In an optional implementation, the electronic device further includes a fourth sound-emitting area, and the fourth sound-emitting area is provided on the third bezel, or the fourth sound-emitting area is provided at a position that is on the second surface and that is close to the third bezel. Therefore, when the electronic device is in the folded state, the second bezel is located at the top of the electronic device, and the third bezel is located at the bottom of the electronic device. Correspondingly, the fourth sound-emitting area is provided at a position close to the third bezel, so that the user can listen to audio, answer a call in hands-free mode, or the like through the fourth sound-emitting area, thereby better meeting a user requirement and improving call experience of the user.

In an optional implementation, the electronic device includes a USB interface, and the USB interface is provided on the fourth bezel of the electronic device. In this implementation, when the electronic device is in the unfolded state, the first bezel is used as a top edge, the second bezel and the fifth bezel are used as side edges, and the user may hold a side edge with one hand. A volume button is disposed on the fourth bezel, that is, located at the bottom of the electronic device. This design facilitates use of the USB interface by the user, better meets a user requirement, and improves user experience.

In an optional implementation, the electronic device includes a volume button, the volume button is disposed on the second bezel of the electronic device, and the volume button is close to the second camera module. In this implementation, when the electronic device is in the unfolded state, the first bezel is used as a top edge, the second bezel and the fifth bezel are used as side edges, and the user may hold a side edge with one hand. The volume button is disposed on the second bezel, that is, located above the right bezel. Correspondingly, when the electronic device is in the folded state, the volume button is located at the top of the electronic device. This design facilitates volume adjustment by the user in the folded state and the unfolded state, thereby better meeting a user requirement, and improving user experience.

In an optional implementation, the electronic device further includes a power button, the power button is disposed on the first bezel of the electronic device, and the power button is close to the first camera module. In this embodiment, when the electronic device is in the folded state, the second bezel is used as a top edge, the first bezel is used as a side edge, and the user may hold the side edge with one hand. Correspondingly, when the electronic device is in the unfolded state, the power button is located on a right side edge of the electronic device. This design facilitates unlocking of the electronic device by the user when the electronic device is in the folded state and the unfolded state, thereby better meeting a user requirement, and improving user experience.

In an optional implementation, the electronic device further includes a first sound-receiving area and a second sound-receiving area, where the first sound-receiving area is provided on the fourth bezel, and the first sound-receiving area is used to capture audio data when the electronic device is in the unfolded state; and the second sound-receiving area is provided on the third bezel, and the second sound-receiving area is used to capture audio data when the electronic device is in the folded state. Therefore, when the electronic device is in the unfolded state, the first display may be enabled to face the user, the user holds a long side of the electronic device, and the fourth bezel is a side edge disposed at the bottom of the electronic device. When the user makes a call or sends a voice message, the fourth bezel is closer to the mouth of the user. In this case, audio data is captured through the first sound-receiving area provided on the fourth bezel, and a sound effect is better, thereby improving call experience of the user. When the electronic device is in the folded state, the second display may be enabled to face the user, the user holds a long side of the electronic device, and the third bezel is a side edge disposed at the bottom of the electronic device. When the user makes a call or sends a voice message, the third bezel is closer to the mouth of the user. In this case, audio data is captured through the second sound-receiving area provided on the third bezel, and a sound effect is better, thereby further improving call experience of the user.

In an optional implementation, when the electronic device is in the unfolded state, a length-to-width ratio A/B of a display area of the electronic device meets: $16/11 \leq A/B \leq 16/8$. Therefore, the electronic device having a display area with this length-to-width ratio has better video compatibility, and visual experience of the user is improved.

In an optional implementation, when the electronic device is in the unfolded state, the length-to-width ratio A/B of the display area of the electronic device is 16/10. Therefore, visual experience of the user can be further improved.

In an optional implementation, the length b of the first bezel of the electronic device meets: $b \leq 95$ mm. Therefore, the length of the first bezel is relatively small, that is, a width of the electronic device used for holding is relatively small. When the electronic device is in the unfolded state, it is convenient for the user to hold the electronic device, thereby improving in-hand experience of the user. In addition, when the electronic device is in the folded state, the electronic device is relatively small in size, facilitating portability for the user.

An embodiment of this application provides an electronic device. The electronic device includes two displays: a first display and a second display. The first display is an inner display, and the second display is an outer display. A first sound-emitting area is provided at the top of the inner display, and a second sound-emitting area is provided at the top of the outer display. The first sound-emitting area is used to emit sound when the electronic device is in a folded state, and the second sound-emitting area is used to emit sound when the electronic device is in a folded state. A user may answer a call and listen to a voice message through the first sound-emitting area and the second sound-emitting area.

In some embodiments, the electronic device further includes a third sound-emitting area and a fourth sound-emitting area. The third sound-emitting area is located close to the bottom of the inner display, and the fourth sound-emitting area is located close to the bottom of the outer display. The first sound-emitting area is used to emit sound when the electronic device is in the folded state, and the second sound-emitting area is used to emit sound when the electronic device is in the folded state. The user may listen to audio or answer a call in hands-free mode through the third sound-emitting area and the fourth sound-emitting area.

In addition, to improve a display effect of the electronic device, when the electronic device is in the folded state, a width of a bezel of the electronic device parallel to a hinge is greater than a width of a bezel of the electronic device perpendicular to the hinge. To improve in-hand experience, the bezel parallel to the hinge may be used for holding, that is, the electronic device is folded and then rotated by 90 degrees for use, and a corresponding component layout is adjusted. For example, the second sound-emitting area may be provided at a position close to the bezel perpendicular to the hinge.

## BRIEF DESCRIPTION OF DRAWINGS

FIG. 1 is a block diagram of a structure of an electronic device according to an embodiment of this application;

FIG. 2 is a diagram of a front structure of an electronic device;

FIG. 3 is a diagram of a rear structure of the electronic device shown in FIG. 2;

FIG. 4 is a diagram of a structure of the electronic device in FIG. 2 when the electronic device is in a bent state;

FIG. 5 is a diagram of a structure of the electronic device in FIG. 2 when the electronic device is in a folded state;

FIG. 6 is a diagram of a disassembled structure of the electronic device in FIG. 2;

FIG. 7 is a diagram of a front structure of a first electronic device in an unfolded state according to an embodiment of this application;

FIG. 8 is a diagram of a rear structure of the electronic device shown in FIG. 7 when the electronic device is in the unfolded state;

FIG. 9 is a diagram of a structure of the electronic device in FIG. 7 when the electronic device is in a folded state;

FIG. 10 is a diagram of a front structure of a second electronic device in an unfolded state according to an embodiment of this application;

FIG. 11 is a diagram of a rear structure of the electronic device shown in FIG. 10 when the electronic device is in the unfolded state;

FIG. 12 is a diagram of a structure of the electronic device in FIG. 10 when the electronic device is in a folded state;

FIG. 13 is a diagram of a rear structure of a third electronic device in an unfolded state according to an embodiment of this application;

FIG. 14 is a diagram of a structure of the electronic device in FIG. 13 when the electronic device is in a folded state;

FIG. 15 is a diagram of a rear structure of a fourth electronic device in an unfolded state according to an embodiment of this application;

FIG. 16 is a diagram of a structure of the electronic device in FIG. 15 when the electronic device is in a folded state;

FIG. 17 is a diagram of a rear structure of a fifth electronic device in an unfolded state according to an embodiment of this application;

FIG. 18 is a diagram of a structure of the electronic device in FIG. 17 when the electronic device is in a folded state;

FIG. 19 is a diagram of a structure of a sixth electronic device in a folded state according to an embodiment of this application;

FIG. 20 is a diagram of a front structure of a seventh electronic device in an unfolded state according to an embodiment of this application;

FIG. 21 is a diagram of a rear structure of the electronic device shown in FIG. 20 when the electronic device is in the unfolded state;

FIG. 22 is a diagram of a structure of the electronic device in FIG. 20 when the electronic device is in a folded state; and

FIG. 23 is a diagram of a structure of an eighth electronic device in a bent state according to an embodiment of this application.

## DESCRIPTION OF EMBODIMENTS

To make the objectives, technical solutions, and advantages of this application clearer, the following further describes this application in detail with reference to the accompanying drawings.

Hereinafter, the terms such as "first" and "second" are intended only for description, and shall not be understood as an indication or implication of relative importance or an implicit indication of a quantity of indicated technical features. Therefore, a feature defined by "first", "second", or the like may explicitly or implicitly include one or more features. In the descriptions of this application, "a plurality of" means at least two unless otherwise stated.

In addition, in this application, position terms such as "upper", and "lower" are defined relative to an illustrative position of a component in the accompanying drawings. It should be understood that these direction terms are relative concepts and are used for relative description and clarification, and may vary accordingly depending on a position change in which components are placed in the accompanying drawings.

The following describes an electronic device used in embodiments of this application.

The electronic device in embodiments of this application may be any electronic device having a display. The electronic device may include but is not limited to a smartphone, a netbook, a tablet computer, a vehicle-mounted device, a wearable device (for example, a smartwatch, a smart band, or smart glasses), a camera (for example, a single-lens reflex camera or a cartridge camera), a personal computer (personal computer, PC), a palmtop computer, a smart television, a personal digital assistant (personal digital assistant, PDA), a portable multimedia player (portable multimedia player, PMP), a projection device, a smart screen device, an augmented reality (augmented reality, AR) or virtual reality (virtual reality, VR) device, a mixed reality (mixed reality, MR) device, a television, a motion-sensing game console in a human-computer interaction scenario, or the like. A specific function and structure of the electronic device are not limited in this application.

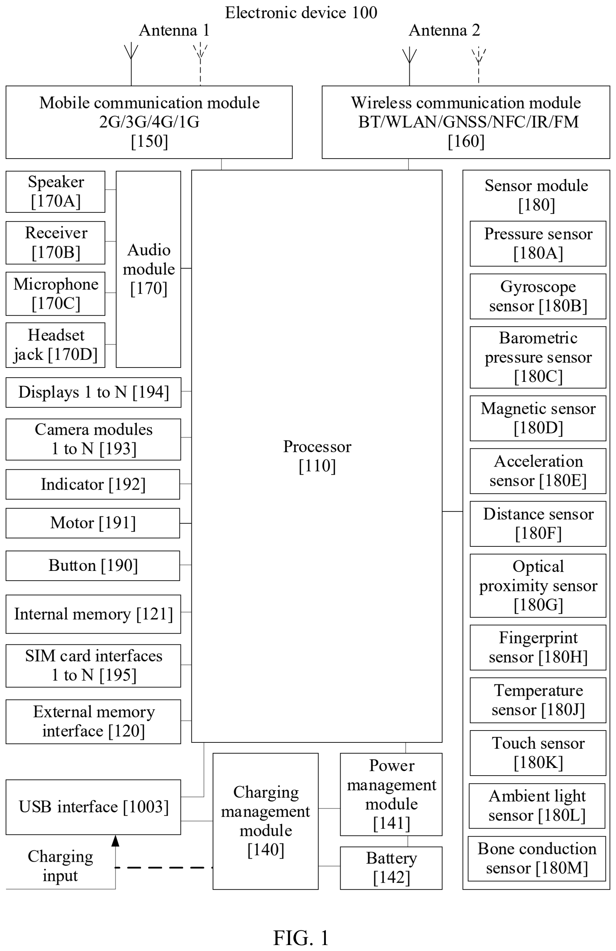

For example, FIG. 1 is a diagram of a structure of an electronic device 100 according to an embodiment of this application. The electronic device 100 may include a processor 110, an external memory interface 120, an internal memory 121, a universal serial bus (universal serial bus, USB) interface 1003, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera module 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, some components may be combined, or some components may be split, or different component arrangements may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), an audio processor/digital processor (the audio processor), a controller, a memory, a video codec, an audio codec, a digital signal processor (digital signal processor, DSP), a baseband processor, a neural-network processing unit (neural-network processing unit, NPU), and/or the like. Different processing units may be independent components, or may be integrated into one or more processors.

In embodiments of this application, the processor 110 may be configured to collaboratively process sensor data (for example, touch sensor data), execute a user operation instruction, and implement video shooting, directional sound pickup, and the like. For example, the processor 110 may collaboratively process the sensor data by using the DSP.

The controller may be a nerve center and a command center of the electronic device 100. The controller may generate an operation control signal based on operation code of a user operation instruction and a time sequence signal, to complete control over instruction fetching and instruction execution. For example, a memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may invoke the instructions or the data directly from the memory. This avoids repeated access and reduces waiting time of the processor 110, thereby improving system efficiency.

For example, in this application, the memory stores a firmware (firmware) program, so that the controller or the processor can implement the directional sound pickup method in this application through an interface or by using a protocol.

In an example, the firmware (firmware) program stored in the memory is mainly configured to implement the following processes: determining a position of a corresponding sound source target based on an obtained operation of selecting a sound pickup partition/a target photographed object by a user in a viewfinder frame; performing analog to digital (analog to digital, A/D) conversion on all analog sound signals that are in an environment and that are captured by a microphone, to obtain digital sound signals; performing fast Fourier transform algorithm (fast Fourier transform algorithm, FFT) transformation on the digital sound signals, to obtain sound spectrum features; further obtaining information about a phase difference between the sound signals based on the sound spectrum features, to preliminarily determine a position of each sound source target in the environment; determining positions of all sound source targets in the environment based on the determined position of the sound source target selected by the user and all sound signals that are in the environment and that are captured by the microphone, to estimate an orientation of the sound source target selected by the user; and performing, based on the estimated orientation of the sound source target selected by the user, noise reduction on sound signals picked up by an omnidirectional microphone, to retain a sound signal of the sound source target selected by the user, and suppress sound signals of other sound source targets in the environment.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module interface, a universal serial bus interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, the microphone, the camera module 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio data transmission. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may receive an audio signal through the I2S interface, to implement an audio recording function, for example, implement a directional sound pickup function.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset; or receive an audio signal input by the wireless communication module 160 through the PCM interface, to obtain audio data captured by a wireless microphone, for example, audio data obtained after directional sound pickup.

The UART interface is a universal serial data bus, and is configured to perform asynchronous communication. The bus may be a two-way communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may receive, through the UART interface, an audio signal transmitted by the Bluetooth module, to implement an audio recording function by using a wireless microphone in the Bluetooth headset, for example, implement a directional sound pickup function.

The MIPI interface may be configured to connect the processor 110 to a peripheral component such as the display 194 or the camera module 193. The MIPI interface includes a camera serial interface (camera serial interface, CSI), a display serial interface (display serial interface, DSI), and the like. In some embodiments, the processor 110 communicates with the camera module 193 through the CSI interface, to implement a photographing function of the electronic device 100. The processor 110 communicates with the display 194 through the DSI interface, to implement a display function of the electronic device 100, for example, implement a display function of an image shooting preview interface, a video recording preview interface, a video recording interface, and the like.

The GPIO interface may be configured by software. The GPIO interface may be configured as a control signal or a data signal. In some embodiments, the GPIO interface may be configured to connect the processor 110 to the camera module 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 1003 is an interface complying with a USB standard specification, and may be specifically a mini USB interface, a micro USB interface, a USB type-C interface, or the like. The USB interface 1003 may be configured to connect to a charger to charge the electronic device 100, or may be configured to transmit data between the electronic device 100 and a peripheral device, or may be configured to connect to a headset for playing audio through the headset, for example, playing audio obtained after directional sound pickup. The interface may be further configured to connect to another electronic device, for example, an AR device.

It should be understood that an interface connection relationship between modules illustrated in embodiments of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera module 193, the wireless communication module 163, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. The mobile communication module 150 may provide a wireless communication solution including 2G/3G/4G/1G or the like and applied to the electronic device 100.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The wireless communication module 160 may provide a wireless communication solution including a wireless local area network (wireless local area network, WLAN) (for example, a wireless fidelity (wireless fidelity, Wi-Fi) network), Bluetooth (Bluetooth, BT), a BeiDou navigation satellite system (BeiDou navigation satellite system, BDS), a global navigation satellite system (global navigation satellite system, GNSS), frequency modulation (frequency modulation, FM), a near field communication (near field communication, NFC) technology, an infrared (infrared, IR) technology, or the like and applied to the electronic device 100.

The electronic device 100 may implement a photographing function by using the image signal processor (image signal processor, ISP), the camera module 193, the video codec, the GPU, the display 194, the application processor, and the like. In this application, the camera module 193 may include a front-facing camera module and a rear-facing camera module of the electronic device 100. The camera module 193 may be an optical zoom lens or the like. This is not limited in this application.

In some embodiments, the ISP may be disposed in the camera module 193. This is not limited in this application.

The camera module 193 is configured to capture a still image or a video. An optical image of an object is generated through the lens and projected to a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as red green blue (red green blue, RGB) or YUV.

In this embodiment of this application, the electronic device 100 may include one or more camera modules 193, for example, at least one front-facing camera module and at least one rear-facing camera module, a plurality of front-facing camera modules, or a plurality of rear-facing camera modules.

The electronic device 100 may implement a display function by using the graphics processing unit (graphics processing unit, GPU), the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a quantum dot light-emitting diode (quantum dot light-emitting diode, QLED), or the like. In some embodiments, the electronic device 100 may include one or more displays 194.

The digital signal processor is configured to process digital signals, and may process other digital signals in addition to digital image signals. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play back or record videos in various encoding formats, for example, moving picture experts group (moving picture experts group, MPEG)-1, MPEG-2, MPEG-3, and MPEG-4.

The NPU is a neural-network (neural-network, NN) computing processor, quickly processes input information by emulating a biological neural network structure, for example, by emulating a transfer mode between human-brain neurons, and may further continuously perform self-learning. Intelligent cognitive applications, such as image recognition, facial recognition, speech recognition, and text understanding, can be implemented on the electronic device 100 by using the NPU.

The external memory interface 120 may be configured to connect to an external storage card, for example, a micro SD card, to extend a storage capacity of the electronic device 100. The external memory card communicates with the processor 110 through the external memory interface 120, to implement a data storage function. For example, files such as audio or videos are stored in the external memory card.

The internal memory 121 may be configured to store executable program code of a computer program. For example, the computer program may include an operating system program and an application program. The operating system may include but is not limited to operating systems such as Symbian® (Symbian®), Android® (Android®), Microsoft® Windows®, Apple iOS®, Blackberry® (Blackberry®), and Harmony® (Harmony®) OS. The executable program code includes instructions. The processor 110 performs various function applications and data processing of the electronic device 100 by running the instructions stored in the internal memory 121. The internal memory 121 may include a program storage area and a data storage area. The program storage area may store an operating system, an application required by at least one function (for example, an audio playing function or an image playing function), and the like. The data storage area may store data (such as audio data, video data, and a phone book) created in use of the electronic device 100. In addition, the internal memory 121 may include a high-speed random access memory, and may further include a non-volatile memory, for example, at least one magnetic disk storage device, a flash memory, or a universal flash storage (universal flash storage, UFS).

The electronic device 100 may implement an audio function, for example, audio playing and sound recording, by using the audio module 170, the speaker 170A, the receiver 170B, the microphone 170C, the headset jack 170D, the application processor, or the like.

The audio module 170 is configured to convert digital audio information into an analog signal for outputting, and is also configured to convert an analog audio input into a digital audio signal. The audio module 170 may be further configured to encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may allow the user to listen to audio, answer a call in hands-free mode, or the like by using the speaker 170A.

The receiver 170B, also referred to as an "earpiece", is configured to convert an electrical audio signal into a sound signal. When a call is answered or a voice message is listened to by using the electronic device 100, the receiver 170B may be placed close to a human ear to listen to a voice.

The microphone 170C, also referred to as a "mike" or a "mic", is configured to convert a sound signal into an electrical signal. When making a call or sending a voice message, the user may emit sound near the microphone 170C through the mouth of the user, to input a sound signal to the microphone 170C. In this application, at least two microphones 170C, for example, a local microphone or a wireless microphone, may be disposed in the electronic device 100.

In some other embodiments, three, four, or more microphones 170C may be disposed in the electronic device 100, to capture sound signals and further implement a noise reduction function.

The headset jack 170D is configured to connect to a wired headset. The headset jack 170D may be the USB interface 1003, or may be a 3.1 mm open mobile electronic device platform (open mobile terminal platform, OMTP) standard interface or a cellular telecommunications industry association of the USA (cellular telecommunications industry association of the USA, CTIA) standard interface.

The touch sensor 180K is also referred to as a "touch panel". The touch sensor 180K may be disposed on the display 194. The touch sensor 180K and the display 194 form a touchscreen, which is also referred to as a "touchscreen". The touch sensor 180K is configured to detect a touch operation performed on or near the touch sensor 180K. The touch sensor may transfer a detected touch operation (including information such as a touch position, touch strength, a contact area, and touch duration) to the processor (for example, the DSP), to determine a touch event type. A visual output related to the touch operation may be provided through the display 194. In some other embodiments, the touch sensor 180K may alternatively be disposed on a surface of the electronic device 100, at a location different from that of the display 194.

For example, in embodiments of this application, the electronic device 100 may detect, by using the touch sensor 180K, an operation of indicating to turn on a camera by the user, an operation of switching a sound pickup mode by the user, an operation of selecting a directional sound pickup function option by the user, an operation of selecting a sound pickup partition option by the user, an operation of starting/pausing video recording by the user, an operation of indicating to play a recorded video by the user, and the like.

In some embodiments, the electronic device 100 is an electronic device 100 with a foldable display, and includes a first display 101 and a second display 102. The first display 101 is a foldable display, and the second display 102 is a non-foldable display (that is, a flat display).

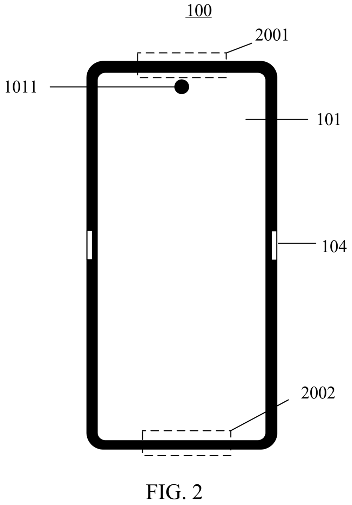

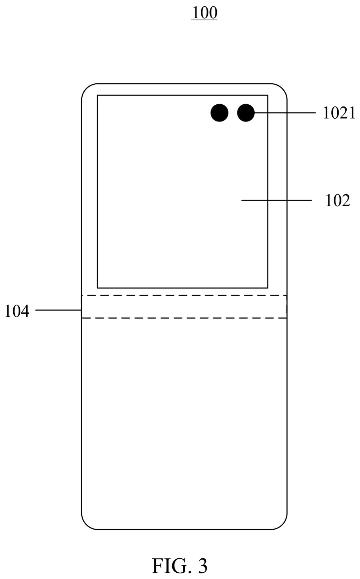

As shown in FIG. 2, the first display 101 is disposed on a first surface of the electronic device 100. As shown in FIG. 3, the second display 102 is disposed on a second surface of the electronic device 100. The first surface and the second surface of the electronic device 100 are different. For example, the first surface may be a front surface of the electronic device 100, and the second surface may be a rear surface of the electronic device 100. The first display 101 may be referred to as an inner display, a primary display, or the like. The second display 102 may be referred to as an outer display, a secondary display, or the like.

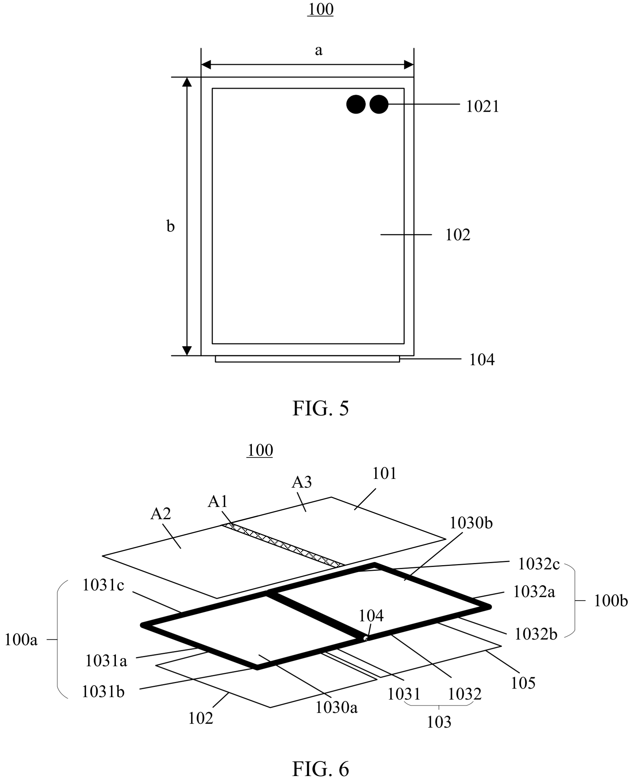

For example, a value of an included angle of the first display 101 may be within a range of [0°, 180°]. For example, when the value of the included angle of the first display 101 is 0°, the first display 101 is in a folded state or a closed state (collectively referred to as the folded state below). When the value of the included angle of the first display 101 is 180°, the first display 101 is in an unfolded state. For example, the first display 101 shown in FIG. 2 is in the unfolded state. The first display 101 shown in FIG. 5 is in the folded state. For example, when the first display 101 is in the unfolded state as shown in FIG. 2, the user may fold the first display 101, so that the first display 101 is in the folded state, as shown in FIG. 5. When the first display 101 is in the folded state as shown in FIG. 5, the user may unfold the first display 101, so that the first display 101 is in the unfolded state, as shown in FIG. 2.

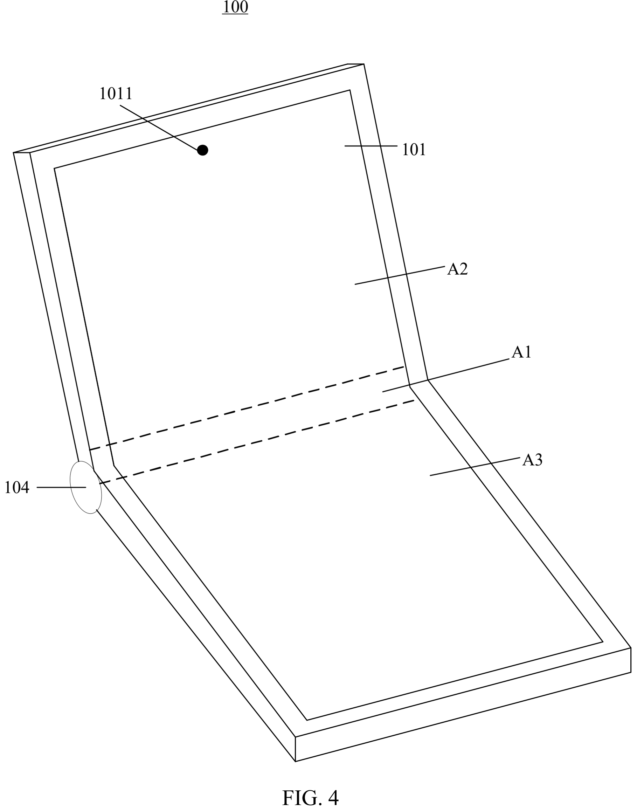

For example, as shown in FIG. 4, when the first display 101 is bent, the first display 101 may be divided into a first display area A2 and a second display area A3 by using a folding area A1 as a boundary. The electronic device 100 may display different content in the first display area A2 and the second display area A3. For example, a size of the first display area A2 is equal to a size of the second display area A3, and the folding area A1 may be provided along a first direction (for example, a horizontal direction shown in FIG. 4). In this way, the first display 101 may be vertically folded (for example, folded upward and downward) along the folding area A1. Certainly, in this embodiment of this application, a folding direction of the first display 101 is not limited. For example, the first display 101 may also be folded horizontally (for example, folded leftward and rightward). In the following embodiments, a mobile phone that can be vertically folded is used as an example for description (for example, FIG. 2).

When the electronic device 100 is in the folded state, the first display area A2 is opposite to the second display area A3. In this embodiment, "opposite" means being arranged face to face, that is, a surface of the first display area A2 is arranged to face a surface of the second display area A3.

For example, as shown in FIG. 6, the second display 102 is disposed at a position that is on the rear surface of the electronic device 100 and that corresponds to the first display area A2. An area of the second display 102 may be less than that of the first display area A2 or the second display area A3. For example, the area of the second display 102 may be equal to half that of the first display area A2, or may be less than half that of the first display area A2, or may be adjusted based on a specific situation. For another example, in another embodiment of this application, the second display 102 may be further set to have the same size as the first display area A2 or the second display area B, and correspondingly disposed with that display area.

In a process in which the user uses the electronic device 100, if the electronic device 100 detects that the device is folded or unfolded, the electronic device 100 performs display switching. For example, when the electronic device 100 is in the unfolded state, the first display 101 is a current working display, that is, the first display 101 is on, and the second display 102 is off. When it is detected that the device is switched from the unfolded state to the folded state, the mobile phone performs display switching to change the current working display from the first display 101 to the second display 102, that is, the first display 101 is off, and the second display 102 is on.

As shown in FIG. 6, the electronic device 100 further includes a middle frame 103, a hinge 104, and a back cover 105.

The middle frame 103 can support the first display 101 and the second display 102.

In some embodiments, the middle frame 103 includes a first middle frame 1031 and a second middle frame 1032. The first middle frame 1031 is rotatably connected to the second middle frame 1032 through the hinge 104. The first display area A2 of the first display 101, the first middle frame 1031, and the second display 102 are stacked. The second display area A3 of the first display 101, the second middle frame 1032, and the back cover 105 are stacked.

In a possible embodiment of this application, the first display 101 may be an organic light-emitting diode (organic light-emitting diode, OLED) display. Because an electroluminescent layer is disposed in each light-emitting subpixel of the OLED display, the OLED display can implement self-luminescence after receiving an operating voltage.

The second display 102 may use a same structure as the first display 101.

The second middle frame 1032 is located between the second display area A3 of the first display 101 and the back cover 105. A surface that is of the second middle frame 1032 and that is away from the second display 102 may be used to mount an internal element such as a battery. After the back cover 105 covers the second middle frame 1032, the internal element is located between the back cover 105 and the second middle frame 1032. The processor may provide display data for the first display 101 and the second display 102, to drive the first display 101 and the second display 102 to display an image.

The electronic device 100 may further include a first camera module 1011 and a second camera module 1021. The first camera module 1011 may be referred to as a front-facing camera module, and the second camera module 1021 may be referred to as a rear-facing camera module. The first camera module 1011 may be disposed on a rear surface of the first display 101 shown in FIG. 1, and a photosensitive surface of the first camera module 1011 is located on the first surface of the electronic device. The second camera module 1021 may be disposed on a side that is of the first middle frame 1031 and that is away from the first display 101, that is, located in mounting space formed between the first middle frame 1031 and the second display 102. A photosensitive surface of the second camera module 1021 is located on the second surface of the electronic device 100.

For example, as shown in FIG. 2 and FIG. 4, the first camera module 1011 is disposed at a middle position above the first display 101. It should be understood that, in this embodiment of this application, parameters such as a quantity and a location of the first camera module 1011 are not limited. For example, in another embodiment, the first camera module 1011 may be disposed at an upper left corner or an upper right corner of the first display 101, or in another appropriate position. There is one, two, or more first camera modules 1011. Similarly, in this embodiment of this application, another element may be further disposed on the first display 101. This is not limited herein.

For example, as shown in FIG. 3 and FIG. 5, the second camera module 1021 is disposed on the second surface of the electronic device 100. Similarly, in this embodiment of this application, a quantity and a location of the second camera module 1021 are not limited. In this embodiment, the second camera module 1021 is disposed on the second display 102, for example, at an upper right corner of the second display 102. In another embodiment, there is one, two, or more second camera modules 1021 (for example, two shown in the figure). For another example, the second camera module 1021 is disposed outside the area of the second display 102, that is, the second display 102 is disposed independently of the second camera module 1021. Similarly, in this embodiment of this application, another element may be further disposed on the second display 102. This is not limited herein.

It may be understood that, in this embodiment of this application, a position relationship, a connection relationship, and the like between the second display 102 and the second surface of the electronic device 100 are not limited. For example, the second display 102 may be integrated with the second surface of the electronic device 100, disposed separately, or the like.

In some embodiments, the electronic device 100 includes a sound-emitting area, and sound may be emitted in the sound-emitting area.

For example, as shown in FIG. 2, an example in which the electronic device 100 is a mobile phone is used. For example, the electronic device 100 may include a sound-emitting area 2002 provided at the bottom and a sound-emitting area 2001 provided at the top. It should be noted that in the sound-emitting area (2001 or 2002), sound may be emitted by a built-in sound-emitting component of the electronic device 100.

In some embodiments, when the electronic device 100 is in the unfolded state, a sound effect of the sound-emitting area is relatively good. When the electronic device 100 is switched to the folded state, a sound effect is relatively poor, and user experience is affected.

Therefore, an embodiment of this application provides an improved electronic device 100, so that a sound emitting effect can be better when the electronic device 100 is in a folded state, and that a sound emitting effect can be improved when the electronic device 100 is in an unfolded state.

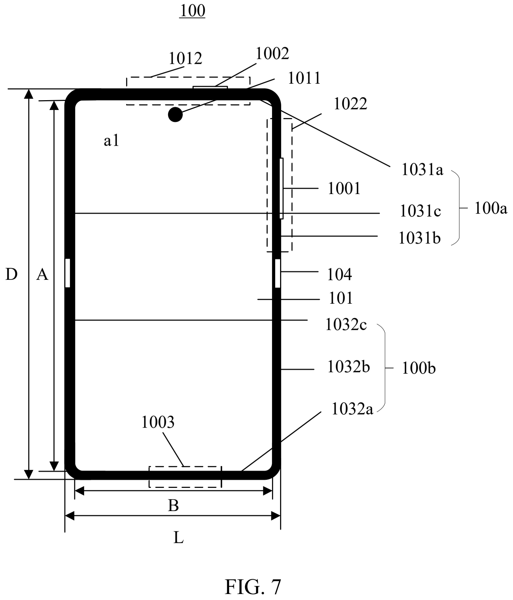

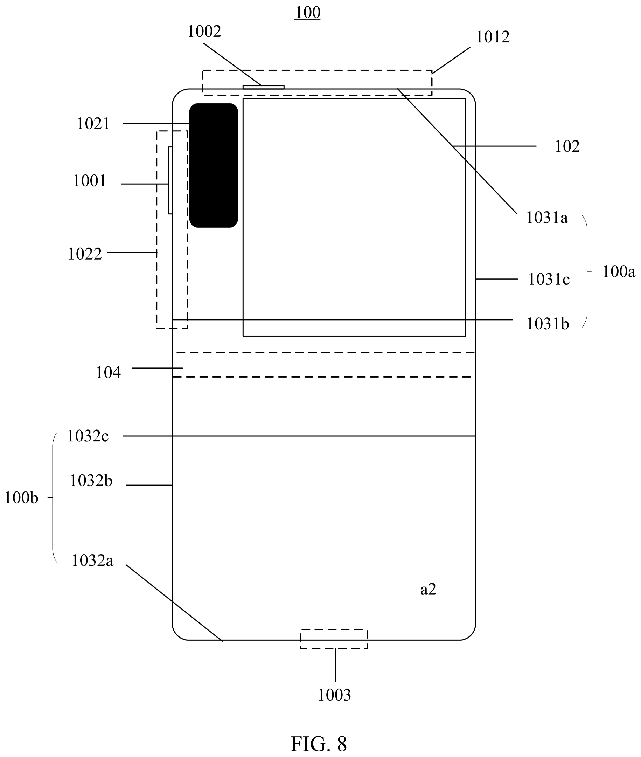

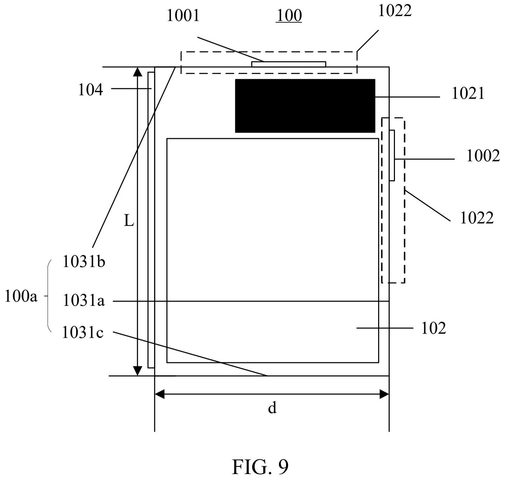

For example, FIG. 7 is a diagram of a front structure of a first electronic device 100 in an unfolded state according to an embodiment of this application. As shown in FIG. 7, the electronic device 100 includes a first sound-emitting area 1012. FIG. 8 is a diagram of a rear structure of the electronic device 100 shown in FIG. 7 when the electronic device is in the unfolded state. FIG. 9 is a diagram of a structure of the electronic device 100 in FIG. 7 when the electronic device is in a folded state. As shown in FIG. 8 and FIG. 9, the electronic device 100 further includes a second sound-emitting area 1022. For example, the first sound-emitting area 1012 is mainly used to emit sound when the electronic device 100 is in the unfolded state, and the second sound-emitting area 1022 is mainly used to emit sound when the electronic device 100 is in the folded state.

Positions of the first sound-emitting area 1012 and the second sound-emitting area 1022 are not limited in this embodiment of this application.

The first middle frame 1031 includes a first side edge 100a connecting the first display area A2 and the second display 102, the second middle frame 1032 includes a second side edge 100b connecting the second display area A3 and the back cover 105, and the electronic device 100 includes a first surface a1 and a second surface a2 that are disposed back to back. In this embodiment, "disposed back to back" refers to back-to-back arrangement, that is, the first surface a1 is disposed to face away from a back side of the second surface a2.

In this embodiment, as shown in FIG. 7, when the electronic device is in the unfolded state, the first surface a1 of the electronic device 100 may be enabled to face the user, the first surface a1 may be a front surface of the electronic device 100, and the first display 101 is disposed on the first surface a1 of the electronic device 100. The electronic device 100 in the state shown in FIG. 7 is flipped, so that the second surface a2 of the electronic device 100 faces the user. The second surface a2 may be a rear surface of the electronic device 100, and the second display 102 is disposed on the second surface a2 of the electronic device 100. The first surface a1 is connected to the second surface a2 through the first side edge 100a and the second side edge 100b.

In some embodiments, as shown in FIG. 7, the first sound-emitting area 1012 is provided on the first surface a1 and/or the first side edge 100a. In this way, when the electronic device 100 is in the unfolded state, the first display 101 may be enabled to face the user. In this case, sound is emitted through the first sound-emitting area 1012, and a sound effect is better, thereby improving call experience of the user.

As shown in FIG. 8 and FIG. 9, the second sound-emitting area 1022 is provided on the second surface a2 and/or the first side edge 100a. In this way, when the electronic device 100 is in the folded state, the second display 102 may be enabled to face the user. In this case, sound is emitted through the second sound-emitting area 1022, and a sound effect is better, thereby further improving call experience of the user.

In some other embodiments, mutual switching may also be performed. For example, when the electronic device 100 is in the unfolded state, sound may be emitted through the second sound-emitting area 1022. When the electronic device 100 is in the folded state, sound may be emitted through the first sound-emitting area 1012.

According to the electronic device 100 provided in this embodiment of this application, two sound-emitting areas are provided. Sound is emitted through one sound-emitting area when the electronic device 100 is in the unfolded state, and sound is emitted through the other sound-emitting area when the electronic device 100 is in the folded state. In this way, the user can receive a sound signal when the electronic device 100 is in the folded state, and can also receive a sound signal when the electronic device 100 is in the unfolded state.

In some embodiments, as shown in FIG. 6, the first middle frame 1031 further includes a first bearing plate 1030a; the first side edge 100a includes a first bezel 1031a, a second bezel 1031b, and a third bezel 1031c, where the first bezel 1031a, the second bezel 1031b, and the third bezel 1031c are disposed around the first bearing plate 1030a; the second middle frame 1032 further includes a second bearing plate 1030b; and the second side edge 100b includes a fourth bezel 1032a, a fifth bezel 1032b, and a sixth bezel 1032c, where the fourth bezel 1032a, the fifth bezel 1032b, and the sixth bezel 1032c are disposed around the second bearing plate 1030b, and both the first bezel 1031a and the fourth bezel 1032a are parallel to the hinge 104.

When the electronic device 100 is in the unfolded state, as shown in FIG. 7 and FIG. 8, the second bezel 1031b and the fifth bezel 1032b are symmetrical with respect to the hinge 104, and the second bezel 1031b and the fifth bezel 1032b are arranged in a direction perpendicular to the hinge 104.

A length-to-width ratio of the electronic device affects a display effect. The first display 101 may be a primary display, and the user views a video, a picture, or the like by using the first display 101. Therefore, a length-to-width ratio of the first display 101 is particularly important for the display effect. In some embodiments, a length-to-width ratio of a display area of the first display 101 is greater than 2, and video compatibility is relatively poor, which affects viewing experience of the user.

For example, as shown in FIG. 5, a shaft-parallel width a of the electronic device 100 in the folded state is less than a shaft-perpendicular width b. The shaft-parallel width refers to a size of the electronic device 100 in a direction parallel to the hinge, and the shaft-perpendicular width refers to a size of the electronic device 100 in a direction perpendicular to the hinge.

The shaft-parallel width a of the electronic device 100 in the folded state is approximately a length of the first bezel 1031a of the electronic device 100. The shaft-perpendicular width b of the electronic device 100 in the folded state is a length of the second bezel 1031b of the electronic device 100. In this embodiment, the length of the second bezel 1031b is greater than the length of the first bezel 1031a, that is, when the electronic device is in the folded state, the shaft-perpendicular width b of the electronic device is greater than the shaft-parallel width a of the electronic device. Then, with reference to FIG. 5, when the electronic device 100 is in the folded state with the second display 102 facing the user, for example, the first bezel 1031a is a top edge of the electronic device 100, the hinge 104 is a bottom edge of the electronic device 100, the third bezel 1031c is a right side edge of the electronic device 100, and the second bezel 1031b is a left side edge of the electronic device 100. During use, the user may hold a side edge with one hand, and short sides are located at the top and the bottom of the electronic device 100.

In this embodiment, a shaft-parallel width of the electronic device 100 in the unfolded state is equal to the shaft-parallel width a of the electronic device 100 in the folded state, and a shaft-perpendicular width of the electronic device 100 in the unfolded state is approximately twice the shaft-perpendicular width of the electronic device 100 in the folded state (the shaft-perpendicular width of the electronic device 100 in the unfolded state is approximately 2b). Because the shaft-parallel width a of the electronic device 100 in the folded state is less than the shaft-perpendicular width b, a length-to-width ratio of the electronic device 100 in the unfolded state (that is, a ratio of the shaft-perpendicular width to the shaft-parallel width of the electronic device in the unfolded state) is greater than 2.

Correspondingly, when the electronic device is in the unfolded state, for a length-to-width ratio of a display area of the electronic device, refer to a length-to-width ratio of the entire electronic device. In this case, the length-to-width ratio of the display area is greater than 2, resulting in a poor display ratio of the electronic device 100.

Therefore, in this embodiment of this application, to improve visual experience of the user, when the electronic device 100 is in the unfolded state, a length-to-width ratio A/B of the display area of the electronic device 100 may meet $16/11 \leq A/B \leq 16/8$. Adjusting the length-to-width ratio of the display area enables the electronic device 100 to be more compatible with videos and the like, better adapt to a viewing angle of human eyes, and achieve better visual experience.

Further, in some embodiments, when the electronic device 100 is in the unfolded state, the length-to-width ratio A/B of the display area of the electronic device 100 is 16/10. Therefore, visual experience of the user can be further improved.

The length-to-width ratio of the display area of the electronic device 100 is limited in the foregoing embodiment. In some embodiments, for a length-to-width ratio of the electronic device 100 in the unfolded state, refer to a length-to-width ratio value of the display area. In other words, when the electronic device 100 is in the unfolded state, a length-to-width ratio of the bezel is approximately equal to the length-to-width ratio value of the display area. For a length and a width of the electronic device in the unfolded state, refer to FIG. 7. As shown in FIG. 7, when the electronic device 100 is in the unfolded state with the first display 101 facing the user, for example, the first bezel 1031a is a top edge of the electronic device 100, the fourth bezel 1032a is a bottom edge of the electronic device 100, the second bezel 1031b and the fifth bezel 1032b are right side edges of the electronic device 100, and the third bezel 1031c and the sixth bezel 1032c are left side edges of the electronic device 100. In other words, a shaft-perpendicular width D (approximately equal to a sum of lengths of the second bezel 1031b and the fifth bezel 1032b, or approximately equal to a sum of lengths of the third bezel 1031c and the sixth bezel 1032c) of the electronic device 100 in the unfolded state is used as a long side of the electronic device 100, and a shaft-perpendicular width L (that is, the length of the first bezel 1031a or a length of the fourth bezel 1032a) of the electronic device 100 in the unfolded state is used as a short side of the electronic device.

Correspondingly, when the electronic device 100 is in the folded state, the shaft-perpendicular width is d, and is approximately equal to the length of the second bezel 1031b (or a length of the third bezel 1031c). The shaft-perpendicular width d of the electronic device 100 in the folded state is approximately 1/2 of the shaft-perpendicular width D of the electronic device 100 in the unfolded state.

The shaft-parallel width of the electronic device 100 in the folded state is L, that is, the length of the first bezel 1031a (or the length of the fourth bezel 1032a), and is equal to the shaft-parallel width of the electronic device in the unfolded state.

In this embodiment, for the length-to-width ratio of the electronic device in the unfolded state, refer to the length-to-width ratio of the display area. However, for an electronic device with this ratio, when the electronic device is in a folded state, a shaft-perpendicular width d of the electronic device is less than a shaft-parallel width L of the electronic device. In this scenario, to improve in-hand experience of the user, compared with FIG. 5, the user may rotate the electronic device in the folded state by 90 degrees for use. In other words, as shown in FIG. 9, when the electronic device 100 is in the folded state with the second display 102 facing the user, for example, the second bezel 1031b is used as a top edge of the electronic device 100, the third bezel 1031c is a bottom edge of the electronic device 100, the first bezel 1031a is a right side edge of the electronic device 100, and the hinge 104 is a left side edge of the electronic device 100.

In this embodiment of this application, the length-to-width ratio of the display area of the electronic device 100 in the unfolded state is less than or equal to 2, thereby improving user experience. In the folded state, the folded electronic device 100 may be rotated by 90 degrees for use, thereby improving in-hand experience of the user.

In some scenarios, the user may also view a video, a picture, or the like by using the second display 102. To improve viewing experience of the user, the length-to-width ratio of the display area of the electronic device 100 in the folded state may be less than 2.

For example, when the electronic device 100 is in the folded state, the shaft-perpendicular width d of the electronic device and the shaft-parallel width L of the electronic device meet: $1.13 \leq L/d \leq 1.26$. In other words, the shaft-perpendicular width d of the electronic device 100 in the folded state is less than the shaft-parallel width L of the electronic device, and the length-to-width ratio of the electronic device in the folded state is less than 2. In some embodiments, for the length-to-width ratio of the display area when the electronic device is in the folded state, refer to the length-to-width ratio of the device, so that visual experience of the user is further improved.

For example, a product of the length-to-width ratio D/L of the electronic device 100 in the unfolded state and the length-to-width ratio L/d of the electronic device 100 in the folded state meets $1.91 \leq (D/L) \times (L/d) \leq 1.98$. It can be learned that the product of the length-to-width ratio of the electronic device 100 in the folded state and the length-to-width ratio of the electronic device 100 in the unfolded state is less than 2. In the foregoing embodiment, the length-to-width ratio of the electronic device 100 in the folded state is greater than 1. With reference to the two embodiments, it can be learned that the length-to-width ratio D/L of the electronic device 100 in the unfolded state is less than 2. In this way, the ratio of the electronic device 100 with this structure in the unfolded state and that in the folded state are better, thereby facilitating holding and viewing by the user.

In some embodiments, to further improve in-hand experience, the shaft-parallel width L of the electronic device 100 may meet $L \leq 95$ mm.

According to the electronic device 100 provided in this embodiment of this application, when the electronic device 100 is in the unfolded state, the shaft-parallel width L is equivalent to a width of a short side, or when the electronic device 100 is in the folded state, the shaft-parallel width L is equivalent to a width of a long side, and the shaft-parallel width L is relatively small. In the unfolded state, it is convenient for the user to hold the electronic device 100, thereby improving in-hand experience of the user. In addition, when the electronic device is in the folded state, the electronic device is relatively small in size, facilitating portability for the user.

In this embodiment, the first sound-emitting area 1012 may be provided on the first bezel 1031a, or the first sound-emitting area 1012 is provided at a position that is on the first surface of the electronic device 100 and that is close to the first bezel 1031a. Correspondingly, the second sound-emitting area 1022 may be provided on the second bezel 1031b, or the second sound-emitting area 1022 is provided at a position that is on the second surface of the electronic device 100 and that is close to the second bezel 1031b.

In some embodiments, that the first sound-emitting area 1012 is provided at a position that is on the first surface of the electronic device 100 and that is close to the first bezel 1031a may be that the first sound-emitting area 1012 is provided in a black border area that is of the electronic device 100 and that is close to the first bezel 1031a.

In some other embodiments, the first sound-emitting area 1012 may alternatively be provided at a position that is on the second surface of the electronic device 100 and that is close to the first bezel 1031a.

Correspondingly, the second sound-emitting area 1022 may alternatively be provided at a position that is on the first surface of the electronic device 100 and that is close to the second bezel 1031b.

As shown in FIG. 7, when the electronic device is in the unfolded state, the first bezel 1031a is used as a top edge, the second bezel 1031b and the fifth bezel 1032b are used as side edges, and the user may hold a side edge with one hand. The first sound-emitting area 1012 is provided at a position close to the top of the electronic device, so that the first sound-emitting area 1012 may be placed close to a human ear to answer a call or listen to a voice message, thereby better meeting a user requirement and improving call experience of the user.

Correspondingly, as shown in FIG. 9, when the electronic device is in the folded state, the second bezel 1031b is used as a top edge, the first bezel 1031a is used as a side edge, and during use, the user may hold the side edge with one hand. The second sound-emitting area 1022 is provided at a position close to the top of the electronic device, so that the second sound-emitting area 1022 may be placed close to a human ear to answer a call or listen to a voice message, thereby better meeting a user requirement and improving call experience of the user.

The following uses an example in which the length of the second bezel 1031b is less than the length of the first bezel 1031a to describe a layout of a sound-emitting component on the electronic device 100.

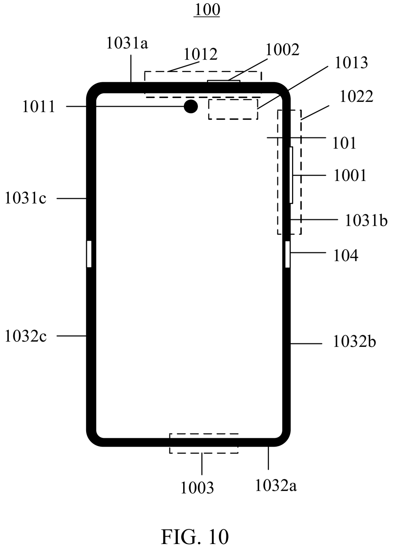

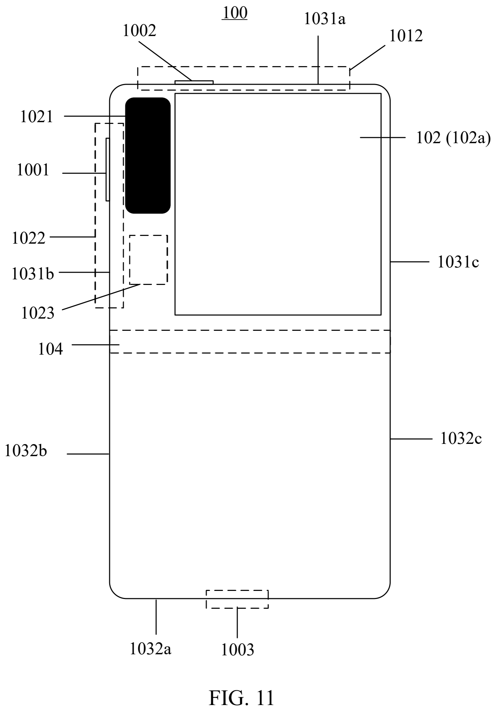

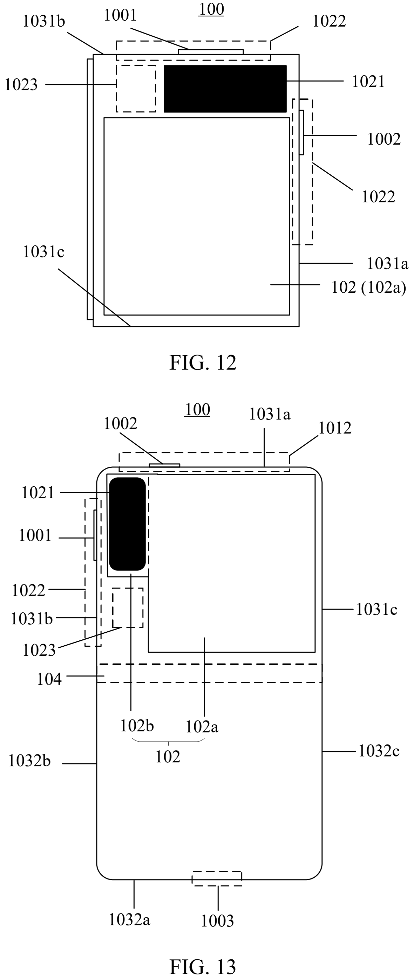

FIG. 10 is a diagram of a front structure of a second electronic device in an unfolded state according to an embodiment of this application. In some embodiments, as shown in FIG. 10, the electronic device 100 further includes a first sound-emitting component 1013. FIG. 11 is a diagram of a rear structure of the electronic device shown in FIG. 10 when the electronic device is in the unfolded state. FIG. 12 is a diagram of a structure of the electronic device in FIG. 10 when the electronic device is in a folded state. As shown in FIG. 11 and FIG. 12, the electronic device 100 further includes a second sound-emitting component 1023.

The first sound-emitting component 1013 and the second sound-emitting component 1023 may be the receiver 170B shown in FIG. 1, and are configured to convert an audio electrical signal into a sound signal. When the electronic device 100 is in the unfolded state, the user may place the first sound-emitting component 1013 close to an ear to listen to a voice when answering a call or listening to a voice message. When the electronic device 100 is in the folded state, the user may place the second sound-emitting component 1023 close to an ear to listen to a voice when answering a call or listening to a voice message.

For example, the first sound-emitting component 1013 communicates with the first sound-emitting area 1012, the second sound-emitting component 1023 communicates with the second sound-emitting area 1022, the first sound-emitting component 1013 and the first camera module 1011 are disposed close to the first bezel 1031a, and the second sound-emitting component 1023 and the second camera module 1021 are disposed close to the second bezel 1031b.

In this way, when the electronic device is in the unfolded state with the first display 101 facing the user, as shown in FIG. 10, the first bezel 1031a is used as a top edge, the second bezel 1031b and the fifth bezel 1032b are used as side edges, and the user may hold a side edge with one hand. Correspondingly, the first sound-emitting component and the first camera module are disposed at a position close to the top of the electronic device, thereby better meeting a user requirement and improving call experience of the user.

Correspondingly, when the electronic device is in the folded state with the second display 102 facing the user, as shown in FIG. 12, the second bezel 1031b is used as a top edge, the first bezel 1031a is used as a side edge, and the user may hold the side edge with one hand. Correspondingly, the second sound-emitting component and the second camera module are disposed at a position close to the top of the electronic device, thereby better meeting a user requirement and improving call experience of the user.

In some embodiments, the first camera module 1011 and the first sound-emitting component 1013 may be disposed below the first display 101. Therefore, the first display may use a full screen design, with a larger display area, thereby improving user experience.

A component arrangement on the second surface of the electronic device 100 is not limited in this embodiment of this application. In some embodiments, as shown in FIG. 11 and FIG. 12, the second surface may include a first area, a second area, and a third area, where the second camera module 1021 is disposed in the first area, the second sound-emitting component 1023 is disposed in the second area, and the second sound-emitting component 1023 and the second camera module 1021 are disposed close to the top of the electronic device 100.

In some embodiments, as shown in FIG. 11 and FIG. 12, the second display 102 includes a first part 102a disposed in the third area. In other words, the second camera module 1021 and the second sound-emitting component 1023 are disposed outside the area of the second display 102, that is, the second display 102 is disposed independently of the second camera module 1021 and the second sound-emitting component 1023. Similarly, in this embodiment of this application, another element may be further disposed on the second display 102. This is not limited herein.

In this embodiment, the second display is disposed independently of the second camera module and the second sound-emitting component, and no hole needs to be provided on the second display, thereby reducing impact of the second camera module and the second sound-emitting component on the second display.

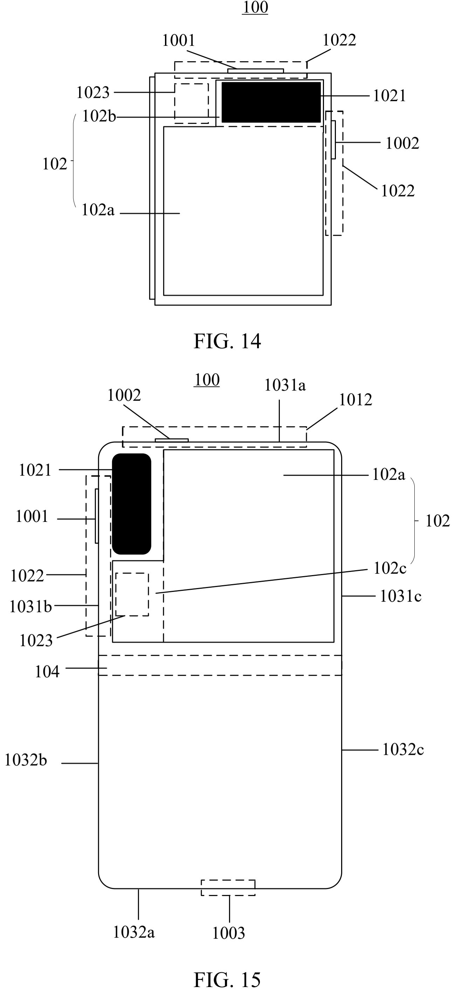

FIG. 13 is a diagram of a rear structure of a third electronic device in an unfolded state according to an embodiment of this application. FIG. 14 is a diagram of a structure of the electronic device in FIG. 13 when the electronic device is in a folded state. In some other embodiments, as shown in FIG. 13 and FIG. 14, the second display 102 includes a first part 102a disposed in the third area and a second part 102b disposed in the first area, and the second camera module 1021 is disposed below the second part 102b of the second display 102. In other words, the second sound-emitting component 1023 is disposed outside the area of the second display 102, and the second camera module 1021 is disposed in the area of the second display 102, that is, the second display 102 is disposed independently of the second sound-emitting component 1023.

In this embodiment, the second display uses a non-rectangular structure, with a larger display area, thereby improving user experience.

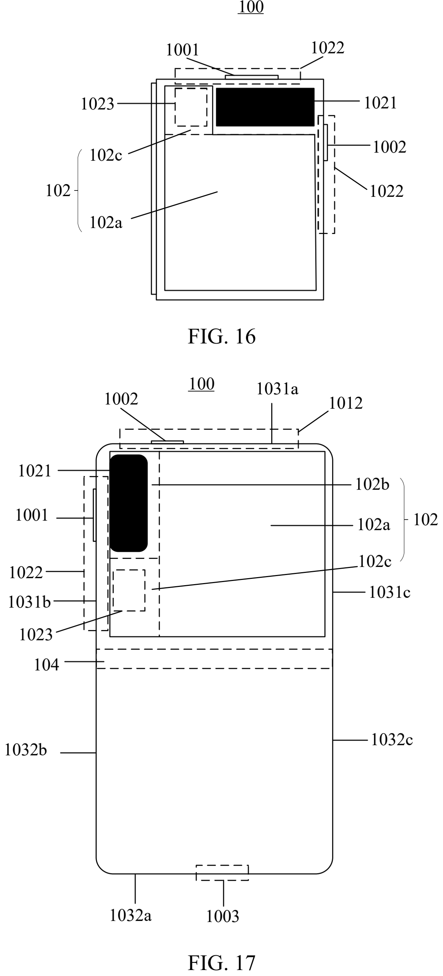

FIG. 15 is a diagram of a rear structure of a fourth electronic device in an unfolded state according to an embodiment of this application. FIG. 16 is a diagram of a structure of the electronic device in FIG. 15 when the electronic device is in a folded state. In some embodiments, as shown in FIG. 15 and FIG. 16, the second display 102 includes a first part 102a disposed in the third area and a third part 102c disposed in the second area, and the second sound-emitting component 1023 is disposed below the third part 102c of the second display 102. In other words, the second sound-emitting component 1023 is disposed in the area of the second display 102, and the second camera module 1021 is disposed outside the area of the second display 102, that is, the second display 102 is disposed independently of the second sound-emitting component 1023.

In this embodiment, the second display uses a non-rectangular structure, with a larger display area, thereby improving user experience.

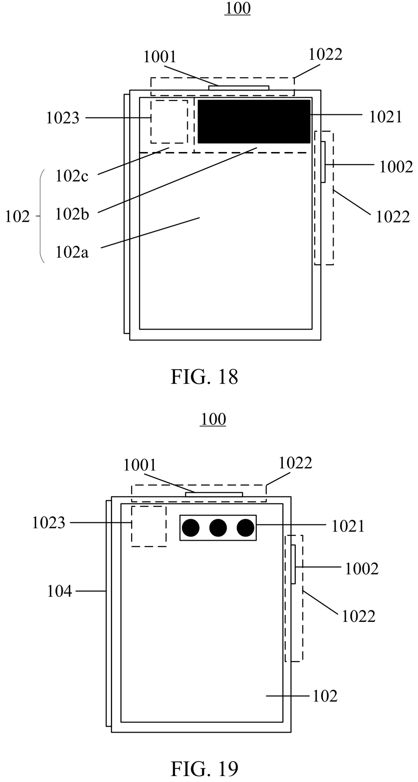

FIG. 17 is a diagram of a rear structure of a fifth electronic device in an unfolded state according to an embodiment of this application. FIG. 18 is a diagram of a structure of the electronic device in FIG. 17 when the electronic device is in a folded state. In some embodiments, as shown in FIG. 17 and FIG. 18, the second display 102 includes a first part 102a disposed in the third area, a second part 102b disposed in the first area, and a third part 102c disposed in the second area, and the second sound-emitting component 1023 is disposed below the third part 102c of the second display 102. In other words, both the second sound-emitting component 1023 and the second camera module 1021 are disposed in the area of the second display 102. The second display uses a full screen design, with a larger display area, thereby improving call experience of the user.

Relative positions of the second camera module 1021 and the second sound-emitting component 1023 are not limited in this application. In some embodiments, the second camera module 1021 and the second sound-emitting component 1023 are arranged in a direction perpendicular to the hinge 104.

In this way, the second camera module and the second sound-emitting component are arranged linearly, to facilitate a maximized design of the second display.

A structure of the second camera module 1021 is not limited in this embodiment of this application. FIG. 19 is a diagram of a structure of a sixth electronic device in a folded state according to an embodiment of this application. In some embodiments, as shown in FIG. 19, the second camera module 1021 includes a plurality of camera modules, and the plurality of camera modules are arranged in a direction perpendicular to the hinge 104.

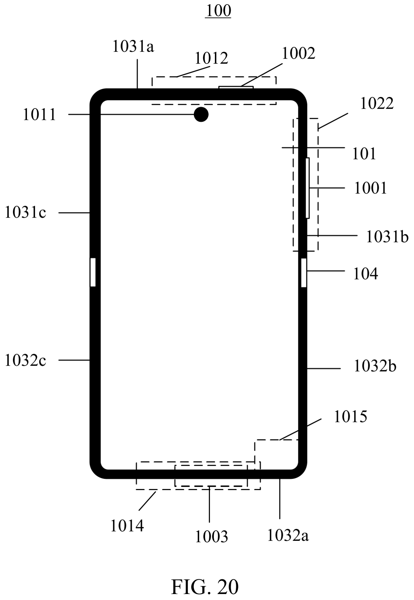

In the foregoing embodiment, when the user makes a normal call, the user may place the first sound-emitting area 1012 or the second sound-emitting area 1022 close to an ear to answer a call or listen to a voice message. FIG. 20 is a diagram of a front structure of a seventh electronic device in an unfolded state according to an embodiment of this application. In some other embodiments, as shown in FIG. 20, the electronic device 100 further includes a third sound-emitting area 1014. The electronic device 100 may allow the user to listen to audio, answer a call in hands-free mode, or the like through the third sound-emitting area 1014.

The third sound-emitting area 1014 may be used to emit sound when the electronic device 100 is in the unfolded state.

A location of the third sound-emitting area 1014 is not limited in this embodiment of this application. In some embodiments, the third sound-emitting area 1014 is provided on the first surface and/or the second side edge. In this way, when the electronic device 100 is in the unfolded state, the first display 101 may be enabled to face the user. In this case, the user listens to audio, or answers a call in hands-free mode or the like through the third sound-emitting area 1014, and a sound effect is better, thereby improving call experience of the user.

In some embodiments, the third sound-emitting area 1014 is located, for example, close to the fourth bezel 1032a.

Therefore, when the electronic device is in the unfolded state, the first bezel 1031a is located at the top of the electronic device, and the fourth bezel 1032a is located at the bottom of the electronic device. Correspondingly, the third sound-emitting area 1014 is provided at a position close to the fourth bezel 1032a, so that the user can listen to audio, answer a call in hands-free mode, or the like through the third sound-emitting area 1014, thereby better meeting a user requirement and improving call experience of the user.

In some embodiments, as shown in FIG. 20, the electronic device further includes a third sound-emitting component 1015, and the third sound-emitting component 1015 communicates with the third sound-emitting area 1014. The third sound-emitting component 1015 is disposed close to the fourth bezel 1032a. The third sound-emitting component 1015 may be the speaker 170A shown in FIG. 1, and is configured to convert an audio electrical signal into a sound signal. The electronic device 100 may allow the user to listen to audio, answer a call in hands-free mode, or the like by using the third sound-emitting component.

In some embodiments, the third sound-emitting component 1015 is disposed below the first display 101.

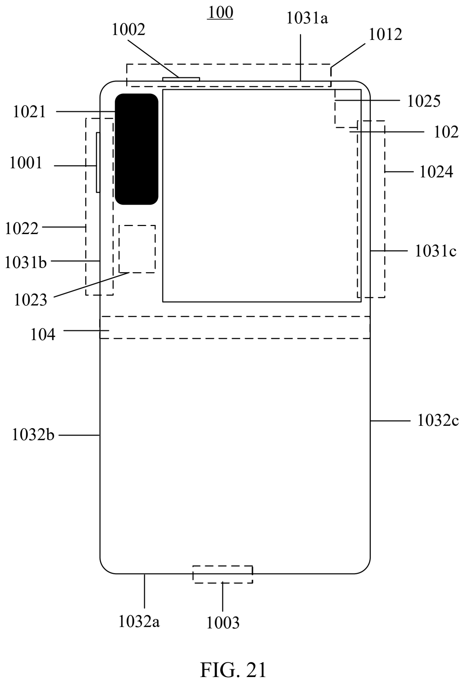

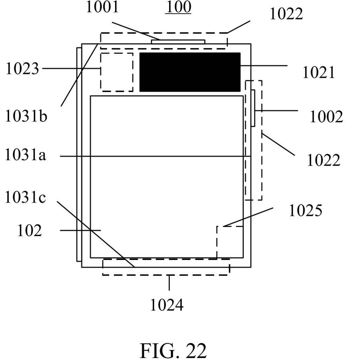

FIG. 21 is a diagram of a rear structure of the electronic device shown in FIG. 20 when the electronic device is in the unfolded state. FIG. 22 is a diagram of a structure of the electronic device in FIG. 20 when the electronic device is in a folded state. In some other embodiments, as shown in FIG. 21 and FIG. 22, the electronic device further includes a fourth sound-emitting area 1024. When the electronic device 100 is in the folded state, the electronic device 100 may allow the user to listen to audio, answer a call in hands-free mode, or the like through the fourth sound-emitting area 1024.

A location of the fourth sound-emitting area 1024 is not limited in this embodiment of this application. In some embodiments, the fourth sound-emitting area 1024 is provided on the second surface and/or the bezel. In this way, when the electronic device 100 is in the unfolded state, the second display 102 may be enabled to face the user. In this case, the user listens to audio, or answers a call in hands-free mode or the like through the fourth sound-emitting area 1024, and a sound effect is better, thereby improving call experience of the user.

In some embodiments, the fourth sound-emitting area 1024 is located, for example, close to the third bezel 1031c.

In this way, as shown in FIG. 22, when the electronic device is in the folded state, the second bezel 1031b is located at the top of the electronic device, and the third bezel 1031c is located at the bottom of the electronic device. Correspondingly, the fourth sound-emitting area 1024 is provided at a position close to the third bezel 1031c, so that the user can listen to audio, answer a call in hands-free mode, or the like through the fourth sound-emitting area 1024, thereby better meeting a user requirement and improving call experience of the user.

In some embodiments, as shown in FIG. 21 and FIG. 22, the electronic device further includes a fourth sound-emitting component 1025, and the fourth sound-emitting component 1025 communicates with the fourth sound-emitting area 1024. The fourth sound-emitting component 1025 is disposed close to the third bezel 1031c. The fourth sound-emitting component 1025 may be the speaker 170A shown in FIG. 1, and is configured to convert an audio electrical signal into a sound signal. The electronic device 100 may allow the user to listen to audio, answer a call in hands-free mode, or the like by using the fourth sound-emitting component 1025.

An arrangement of the fourth sound-emitting component 1025 is not limited in this embodiment of this application. In some embodiments, the fourth sound-emitting component 1025 is disposed at a lower left corner or a lower right corner of the second surface of the electronic device, so that the second display 102 avoids the fourth sound-emitting component 1025.

In some other embodiments, the fourth sound-emitting component 1025 is disposed below the second display 102. In this way, the fourth sound-emitting component 1025 is disposed below the second display 102, that is, the fourth sound-emitting component 1025 may be disposed in the display area of the second display 102. This helps implement a full screen design of the second display 102 and improve visual experience of the user.

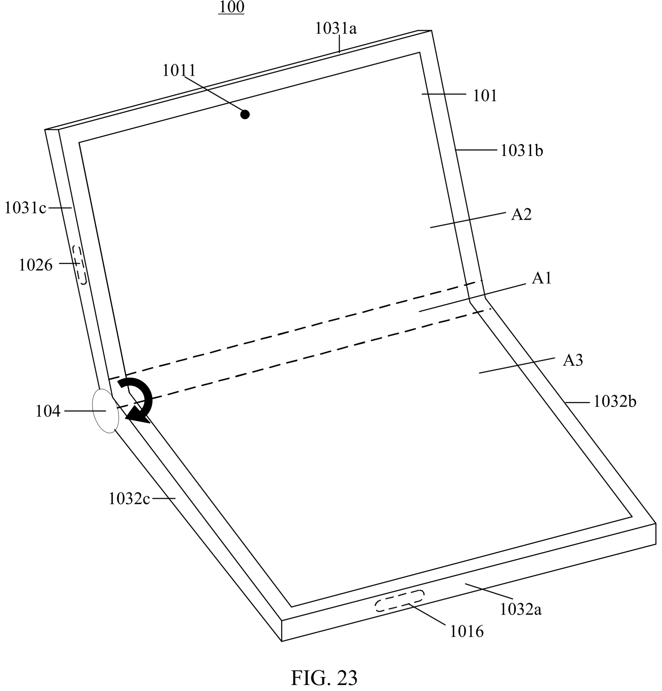

In some embodiments, FIG. 23 is a diagram of a structure of an eighth electronic device in a bent state according to an embodiment of this application. As shown in FIG. 23, the electronic device 100 further includes a first sound-receiving area 1016 and a second sound-receiving area 1026, the first middle frame 1031 further includes a third bezel 1031c, and the third bezel 1031c is parallel to the second bezel 1031b.

In some embodiments, the first sound-receiving area 1016 is provided on the fourth bezel 1032a, and the first sound-receiving area 1016 is used to capture audio data when the electronic device 100 is in the unfolded state. In this way, when the electronic device 100 is in the unfolded state, the first display 101 may be enabled to face the user, the user holds a long side of the electronic device 100, and the fourth bezel 1032a is a side edge disposed at the bottom of the electronic device 100. When the user makes a call or sends a voice message, the fourth bezel 1032a is closer to the mouth of the user. When the user makes a call or sends a voice message, the user may place the mouth close to the first sound-receiving area 1016 provided on the fourth bezel 1032a to capture audio data, so that a sound effect is better, thereby improving call experience of the user.

The second sound-receiving area 1026 is provided on the third bezel 1031c, and the second sound-receiving area 1026 is used to capture audio data when the electronic device 100 is in the folded state. In this way, when the electronic device 100 is in the folded state, the second display 102 may be enabled to face the user, the user holds a long side of the electronic device 100, and the third bezel 103 1c is a side edge disposed at the bottom of the electronic device 100. When the user makes a call or sends a voice message, the third bezel 1031c is closer to the mouth of the user. When the user makes a call or sends a voice message, the user may place the mouth close to the second sound-receiving area 1026 provided on the third bezel 103 1c to capture audio data, so that a sound effect is better, thereby further improving call experience of the user.

In some examples of this embodiment, the first sound-receiving area 1016 and the second sound-receiving area 1026 may also be used interchangeably. For example, when the electronic device 100 is in the unfolded state, audio data may be captured through the second sound-receiving area 1026; or when the electronic device 100 is in the folded state, audio data may be captured through the first sound-receiving area 1016.

In some embodiments, the electronic device further includes a first sound-receiving component and a second sound-receiving component. The first sound-receiving component communicates with the first sound-receiving area 1016, and the second sound-receiving component communicates with the second sound-receiving area 1026. The first sound-receiving component and the second sound-receiving component are configured to convert a sound signal into an electrical signal.

The first sound-receiving component and the second sound-receiving component may be the microphone 170C in FIG. 1. The microphone is also referred to as a "mike" or a "mic", and is configured to convert a sound signal into an electrical signal. When the electronic device 100 is in the unfolded state, when the user makes a call or sends a voice message, the user may place the mouth close to the first sound-receiving component to emit sound, and input a sound signal into the first sound-receiving component. When the electronic device 100 is in the folded state, when the user makes a call or sends a voice message, the user may place the mouth close to the second sound-receiving component to emit sound, and input a sound signal into the second sound-receiving component.

According to the electronic device 100 provided in this embodiment of this application, two sound-receiving areas are provided. One sound-receiving area captures audio data when the electronic device 100 is in the unfolded state, and the other sound-receiving area captures audio data when the electronic device 100 is in the folded state. Therefore, the user can make a call when the electronic device 100 is in the folded state, and can also make a call when the electronic device 100 is in the unfolded state.

In some embodiments, as shown in FIG. 7 and FIG. 8, the electronic device 100 further includes a volume button 1001, a power button 1002, and a USB interface 1003 that are disposed on a bezel. With reference to the accompanying drawings, the following describes a manner of disposing the volume button 1001, the power button 1002, and the USB interface 1003.

In some embodiments, with reference to FIG. 7, FIG. 8, and FIG. 9, the volume button 1001 is disposed on the second bezel 1031b of the electronic device 100, and the volume button 1001 is close to the second camera module 1021.

In this embodiment, as shown in FIG. 7 and FIG. 8, when the electronic device 100 is in the unfolded state, the first bezel 1031a is used as a short side, the second bezel 1031b and the fifth bezel 1032b are used as long sides, and the user may hold a long side with one hand. In this case, the short sides are located at the top and the bottom of the electronic device 100, and the volume button 1001 is located on a side edge of the electronic device. Correspondingly, as shown in FIG. 9, when the electronic device is in the folded state, the volume button 1001 is located at the top of the electronic device. This design facilitates volume adjustment by the user in the folded state and the unfolded state, thereby better meeting a user requirement and improving call experience of the user.

In some embodiments, with reference to FIG. 7, FIG. 8, and FIG. 9, the power button 1002 is disposed on the first bezel 1031a of the electronic device 100, and the power button 1002 is close to the first camera module 1011.

In this embodiment, as shown in FIG. 7 and FIG. 8, when the electronic device 100 is in the folded state, the second bezel 1031b is used as a long side, the first bezel 1031a is used as a short side, and the user may hold a side edge with one hand. The short side is located at the top and the bottom of the electronic device 100, and the power button 1002 is located at the top of the electronic device. Correspondingly, when the electronic device 100 is in the unfolded state, as shown in FIG. 9, the power button 1002 is located on a right side edge of the electronic device 100. This design facilitates unlocking of the electronic device by the user when the electronic device is in the folded state and the unfolded state, thereby better meeting a user requirement and improving call experience of the user.

In some embodiments, as shown in FIG. 7 and FIG. 8, the USB interface 1003 is disposed on the fourth bezel 1032a of the electronic device 100.

In this embodiment, as shown in FIG. 7 and FIG. 8, when the electronic device 100 is in the unfolded state, the fourth bezel 1032a is used as a bottom edge, and the USB interface 1003 is disposed on the bottom edge of the electronic device 100, so that the user connects a charger to charge the electronic device 100, or the USB interface 1003 is configured to transmit data between the electronic device 100 and a peripheral device, thereby better meeting a user requirement and improving user experience.

An embodiment of this application provides an electronic device. The electronic device includes two displays: a first display and a second display. The first display is an inner display, and the second display is an outer display. A first sound-emitting area is provided at the top of the inner display, and a second sound-emitting area is provided at the top of the outer display. The first sound-emitting area is used to emit sound when the electronic device is in a folded state, and the second sound-emitting area is used to emit sound when the electronic device is in a folded state. A user may answer a call and listen to a voice message through the first sound-emitting area and the second sound-emitting area.

In some embodiments, the electronic device further includes a third sound-emitting area and a fourth sound-emitting area. The third sound-emitting area is located close to the bottom of the inner display, and the fourth sound-emitting area is located close to the bottom of the outer display. The first sound-emitting area is used to emit sound when the electronic device is in the folded state, and the second sound-emitting area is used to emit sound when the electronic device is in the folded state. The user may listen to audio or answer a call in hands-free mode through the third sound-emitting area and the fourth sound-emitting area.

In addition, to improve a display effect of the electronic device, when the electronic device is in the folded state, a width of a bezel of the electronic device parallel to a hinge is greater than a width of a bezel of the electronic device perpendicular to the hinge. To improve in-hand experience, the bezel parallel to the hinge may be used for holding, that is, the electronic device is folded and then rotated by 90 degrees for use, and a corresponding component layout is adjusted. For example, the second sound-emitting area may be provided at a position close to the bezel perpendicular to the hinge.

It may be understood that the structure shown in embodiments of this application does not constitute a specific limitation on the electronic device 100. In some other embodiments of this application, the electronic device 100 may include more or fewer components than those shown in the figure, some components may be combined, or some components may be split, or different component arrangements may be used. The illustrated components may be implemented by hardware, software, or a combination of software and hardware.

It should be understood that each module in the electronic device 100 may be implemented in a form of software and/or hardware. This is not specifically limited herein. In other words, the electronic device 100 is presented in a form of a functional module. Herein, the "module" may be an application-specific integrated circuit ASIC, a circuit, a processor that executes one or more software or firmware programs, a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or the functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An electronic device, wherein the electronic device comprises a first display, a first middle frame, a hinge, a second middle frame, a first sound-emitting area, a second sound-emitting area, a second display, and a back cover, wherein

   the first display comprises a first display area and a second display area, and when the electronic device is in a folded state, the first display area of the first display is opposite to the second display area of the first display;
   the first middle frame is rotatably connected to the second middle frame through the hinge, the first display area of the first display, the first middle frame, and the second display are stacked, and the second display area of the first display, the second middle frame, and the back cover are stacked;
   the first middle frame comprises a first side edge connecting the first display area and the second display, the second middle frame comprises a second side edge connecting the second display area and the back cover, the first display is disposed on a first surface of the electronic device, the second display is disposed on a second surface of the electronic device, the first sound-emitting area is provided on the first surface or the first side edge, and the second sound-emitting area is provided on the second surface or the first side edge; and
   the first sound-emitting area is used to emit sound when the electronic device is in an unfolded state, and the second sound-emitting area is used to emit sound when the electronic device is in the folded state.

2. The electronic device according to claim 1, wherein the first side edge comprises a first bezel, a second bezel connected to one end of the first bezel, and a third bezel connected to the other end of the first bezel; the second side edge comprises a fourth bezel, a fifth bezel connected to one end of the fourth bezel, and a sixth bezel connected to the other end of the fourth bezel; the first bezel and the fourth bezel are both parallel to the hinge; and when the electronic device is in the unfolded state, the second bezel, the third bezel, the fifth bezel, and the sixth bezel are arranged in a direction perpendicular to the hinge;

   a length of the second bezel is less than a length of the first bezel, and the length of the first bezel is less than a sum of lengths of the second bezel and the fifth bezel;
   the first sound-emitting area is provided on the first bezel, or the first sound-emitting area is provided at a position that is on the first surface and that is close to the first bezel; and
   the second sound-emitting area is provided on the second bezel, or the second sound-emitting area is provided at a position that is on the second surface and that is close to the second bezel.

3. The electronic device according to claim 2, wherein the electronic device further comprises a first camera module, a first sound-emitting component, a second sound-emitting component, and a second camera module, wherein the first sound-emitting component communicates with the first sound-emitting area, the second sound-emitting component communicates with the second sound-emitting area, the first sound-emitting component and the first camera module are disposed close to the first bezel, and the second sound-emitting component and the second camera module are disposed close to the second bezel.

4. The electronic device according to claim 3, wherein the first camera module and the first sound-emitting component are disposed below the first display.

5. The electronic device according to claim 3 or 4, wherein the second surface comprises a first area, a second area, and a third area, wherein the second camera module is disposed in the first area, the second sound-emitting component is disposed in the second area, and the second display comprises a first part disposed in the third area.

6. The electronic device according to claim 5, wherein the second display further comprises a second part disposed in the first area, and the second camera module is disposed below the second part of the second display.

7. The electronic device according to claim 5 or 6, wherein the second display further comprises a third part disposed in the second area, and the second sound-emitting component is disposed below the third part of the second display.

8. The electronic device according to any one of claims 3 to 7, wherein the second camera module and the second sound-emitting component are arranged in a direction perpendicular to the hinge.

9. The electronic device according to any one of claims 3 to 8, wherein the second camera module comprises a plurality of camera modules, and the plurality of camera modules are arranged in a direction perpendicular to the hinge.

10. The electronic device according to any one of claims 2 to 9, wherein the electronic device further comprises a third sound-emitting area, and the third sound-emitting area is provided on the fourth bezel, or the third sound-emitting area is provided at a position that is on the first surface and that is close to the fourth bezel.

11. The electronic device according to any one of claims 2 to 10, wherein the electronic device further comprises a USB interface, and the USB interface is disposed on the fourth bezel of the electronic device.

12. The electronic device according to any one of claims 2 to 11, wherein the electronic device further comprises a volume button, and the volume button is disposed on the second bezel of the electronic device.

13. The electronic device according to any one of claims 2 to 12, wherein the electronic device further comprises a power button, and the power button is disposed on the first bezel of the electronic device.

14. The electronic device according to any one of claims 2 to 13, wherein the electronic device further comprises a first sound-receiving area and a second sound-receiving area, wherein the first sound-receiving area is provided on the fourth bezel, and the first sound-receiving area is used to capture audio data when the electronic device is in the unfolded state; and the second sound-receiving area is provided on the third bezel, and the second sound-receiving area is used to capture audio data when the electronic device is in the folded state.

15. The electronic device according to any one of claims 2 to 14, wherein the length L of the first bezel of the electronic device meets:

$$L \leq 95 \text{ mm}.$$

16. The electronic device according to any one of claims 1 to 15, wherein when the electronic device is in the unfolded state, a length-to-width ratio A/B of a display area of the electronic device meets:

$$16/11 \leq A/B \leq 16/8.$$

17. The electronic device according to claim 16, wherein when the electronic device is in the unfolded state, the length-to-width ratio A/B of the display area of the electronic device is 16/10.

Electronic device 100

Antenna 1                                    Antenna 2

| Mobile communication module 2G/3G/4G/1G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Camera modules 1 to N [193]

Indicator [192]

Motor [191]

Button [190]

Internal memory [121]

SIM card interfaces 1 to N [195]

External memory interface [120]

Processor [110]

USB interface [1003]

Charging input

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

FIG. 2

100

FIG. 3

FIG. 4

<u>100</u>

FIG. 5

<u>100</u>

FIG. 6

FIG. 7

FIG. 8

FIG. 9

FIG. 10

FIG. 11

FIG. 12

FIG. 13

100

FIG. 14

100

FIG. 15

<u>100</u>

1001  1022

1023

1021

102c

1002

102

1022

102a

FIG. 16

<u>100</u>  1031a

1002  1012

1021

102b

1001

102a  102

1022

102c

1031b

1031c

1023

104

1032b

1032c

1032a  1003

FIG. 17

100

1001    1022

1023    1021

102c    1002

102    102b    1022

102a

FIG. 18

100

1001    1022

1023    1021

104    1002

1022

102

FIG. 19

FIG. 20

FIG. 21

FIG. 22

FIG. 23

## INTERNATIONAL SEARCH REPORT

| International application No. |
| --- |
| **PCT/CN2024/141615** |

| A. | CLASSIFICATION OF SUBJECT MATTER |
| --- | --- |
| | H04M1/02(2006.01)i |

According to International Patent Classification (IPC) or to both national classification and IPC

| B. | FIELDS SEARCHED |
| --- | --- |

Minimum documentation searched (classification system followed by classification symbols)

IPC:H04M1/-

Documentation searched other than minimum documentation to the extent that such documents are included in the fields searched

Electronic data base consulted during the international search (name of data base and, where practicable, search terms used)

CNTXT, VEN, WOTXT, USTXT, EPTXT: 折叠, 屏, 发声, 声音, 扬声器, 展开, 状态, 摄像, 长宽, 长度; fold+, screen?, sound+, loudspeaker?, unfold+, state?, camera?, length, width

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 117176846 A (VIVO MOBILE COMMUNICATION CO., LTD.) 05 December 2023 (2023-12-05)<br>description, paragraphs 2 and 31-60, and figures 1-7 | 1-17 |
| A | CN 114554348 A (BEIJING XIAOMI MOBILE SOFTWARE CO., LTD.) 27 May 2022 (2022-05-27)<br>entire document | 1-17 |
| A | CN 116320150 A (ZHUHAI MEIZU TECHNOLOGY CO., LTD.) 23 June 2023 (2023-06-23)<br>entire document | 1-17 |
| A | US 2021152678 A1 (SAMSUNG ELECTRONICS CO., LTD. et al.) 20 May 2021 (2021-05-20)<br>entire document | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 March 2025** | **06 March 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/141615** |

| Patent document cited in search report | | | Publication date (day/month/year) | Patent family member(s) | | | Publication date (day/month/year) |
|---|---|---|---|---|---|---|---|
| CN | 117176846 | A | 05 December 2023 | None | | | |
| CN | 114554348 | A | 27 May 2022 | None | | | |
| CN | 116320150 | A | 23 June 2023 | None | | | |
| US | 2021152678 | A1 | 20 May 2021 | WO | 2021096196 | A1 | 20 May 2021 |
| | | | | US | 11064060 | B2 | 13 July 2021 |
| | | | | KR | 20210058556 | A | 24 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410399438